# EUROPEAN PATENT APPLICATION

(11) **EP 4 411 911 A1**
(43) Date of publication of application: **07.08.2024**
(21) Application number: 22874947.9
(22) Date of filing: 28.09.2022
(51) Int. Cl.: H01M 10/052

(54) **SEPARATOR FOR LITHIUM-SULFUR BATTERY, METHOD FOR PREPARING SAME AND LITHIUM-SULFUR BATTERY CONTAINING SAME**

(30) Priority: 28.09.2021 CN 202111146157
(71) Applicant: China Petroleum & Chemical Corporation, Beijing 100728 (CN); Shanghai Research Institute of Petrochemical Technology SINOPEC, Pudong New Area Shanghai 201208 (CN)
(72) Inventor: YANG, Weimin, Shanghai 201208 (CN); LI, Jun, Shanghai 201208 (CN); WANG, Zhendong, Shanghai 201208 (CN); WANG, Xiaofei, Shanghai 201208 (CN); LAN, Dawei, Shanghai 201208 (CN); ZHANG, Daoming, Shanghai 201208 (CN); XUE, Haoliang, Shanghai 201208 (CN); ZHOU, Sifei, Shanghai 201208 (CN)
(74) Representative: Hoffmann Eitle
(86) International application number: PCT/CN2022/121936
(87) International publication number: WO 2023/051562

(57) **Abstract**

Disclosed are a separator for a lithium-sulfur battery, a method for preparing the same and a lithium-sulfur battery containing the same. The separator comprises: a polymeric substrate film; and a composite layer on one surface of the polymeric substrate film, wherein the composite layer comprises a SCM molecular sieve and a conductive carbon material, wherein the SCM molecular sieve is selected from SCM-14 and SCM-15, and preferably, the SCM molecular sieve further contains cobalt. The separator in accordance with the present disclosure can effectively suppress the shuttle of polysulfides in lithium-sulfur batteries, and thereby reduce side reactions within the batteries, lower the self-discharge rate of lithium-sulfur batteries, and improve the cycling performances, rate performances, and storage life of the batteries.

## Description

### Technical field

The present disclosure relates to the field of battery separators. More particular, the present disclosure relates to a separator for lithium-sulfur batteries, a method for preparing the same and a lithium-sulfur battery containing the same.

### Background

In recent years, lithium-ion batteries have gradually approached their theoretical limit in energy density due to the low theoretical specific capacity of their positive electrode materials, and thereby have been unable to meet the demands associated with rapid development of new energy electric vehicles and large capacity energy storage systems. Therefore, it is urgent to develop new secondary battery systems with high specific energy. Lithium-sulfur batteries are ideal alternatives to lithium-ion batteries due to their high theoretical specific capacity (1675 mAh/g) and theoretical energy density (2600 Wh/kg). They have become a research focus for the next generation of secondary batteries with high specific energy. In addition, their positive electrodes use sulfur as active materials, which may have advantages such as abundant natural resources, low price, and environmental friendliness.

However, the current lithium-sulfur batteries still face many challenges in application. Among others, the high self-discharge rate is one of the key issues limiting their application. The high self-discharge behavior of lithium-sulfur batteries is mainly due to the "shuttle effect" of soluble polysulfides during storage. That is, in the open circuit state, the electrochemical intermediate products, polysulfides (Li₂Sₓ, 2<x ≤ 8), will dissolve in conventional organic electrolytes and pass through the separator under the action of concentration gradient to undergo chemical side reactions with the lithium negative electrode, resulting in irreversible capacity loss and open circuit voltage decrease.

To inhibit the self-discharge behavior of lithium-sulfur batteries during storage, the current research strategy is mainly to modify the electrolyte, for example, by adding lithium nitrate additives into conventional electrolytes (ACS Appl. Mater. Interfaces 2018, 10, 35175-35183). Lithium nitrate can undergo a reduction reaction on the surface of the lithium negative electrode to form a solid electrolyte layer containing LiNₓO_{y}, LisN and Li₂O, thereby inhibiting the reaction between polysulfides and the lithium negative electrode and reducing the self-discharge rate of lithium-sulfur batteries. However, excessive addition of lithium nitrate may have an adverse impact on the batteries, such as decomposing on the surface of the positive electrode to form a passivation layer, which may hinder mass transfer and electron conduction, and increase electrolyte viscosity, which may increase internal resistance and reduce rate performances.

At present, it has been proposed to use molecular sieves to modify the separators in the art, for example in CN107546356A and CN103490027A. They take advantage of the physical barrier effect of molecular sieves such as ZSM-35, SAPO-34, 3A, and 13X, which to some extent limits the migration and diffusion of Li₂Sₓ in the electrolyte, thereby improving battery performances.

There is still a demand for battery separators which can provide further improvements on performances of lithium-sulfur batteries to make them meet the rapid development needs of new energy electric vehicles and large-capacity energy storage systems.

### Summary of invention

The inventor of the present invention has found through extensive research that, by selecting molecular sieves with different compositions and structures and using them to modify the separator for lithium-sulfur batteries, the performance of the batteries can be further improved, thereby meeting the above-mentioned demand in the prior art. In particular, certain SCM molecular sieves, preferably those further containing cobalt, can more effectively suppress the shuttle of polysulfides in lithium-sulfur batteries, thereby reduce side reactions within the batteries, lower the self-discharge rate of lithium-sulfur batteries, and improve the cycling performances, rate performances and storage life of the batteries. As a result, the inventor completed the present invention.

In the first aspect, provided in the present disclosure is a separator for lithium-sulfur batteries, comprising a polymeric substrate film, and a composite layer disposed on one surface of the polymeric substrate film, wherein the composite layer comprises a SCM molecular sieve and a conductive carbon material, and wherein the SCM molecular sieve is selected from a group consisting of SCM-14 and SCM-15.

In the second aspect, provided in the present disclosure is a method for preparing the above-mentioned separator, comprising:
(1) mixing the SCM molecular sieve and the conductive carbon material to obtain a mixture, wherein the SCM molecular sieve is selected from a group consisting of SCM-14 and SCM-15;
(2) dispersing the mixture and a binder in a solvent to obtain a coating slurry;
(3) applying the coating slurry on one surface of the polymeric substrate film, and then removing the solvent, to obtain the separator.

In the third aspect, provided in the present disclosure is use of the above-mentioned separator in lithium-sulfur batteries.

In the fourth aspect, provided in the present disclosure is a lithium-sulfur battery comprising a positive electrode, a negative electrode, and the above-mentioned separator between the positive and negative electrodes.

Specifically, the present disclosure may be embodied in the following items:
1. A molecular sieve modified separator, wherein the molecular sieve modified separator comprises a composite modified layer of SCM-14 molecular sieve/a conductive carbon material and a polymeric substrate film, and wherein the composite modified layer of SCM-14 molecular sieve/conductive carbon material is disposed evenly on one surface of the polymeric substrate film.
2. The molecular sieve modified separator of item 1, characterized in that, materials for the polymeric substrate film are at least one selected from a group consisting of polyethylene, polypropylene, polyimide, polyacrylonitrile, polyethylene terephthalate, polytetrafluoroethylene, and polyvinylidene fluoride, preferably polyethylene and polypropylene.
3. The molecular sieve modified separator of item 1, characterized in that, the composite modified layer of SCM-14 molecular sieve/conductive carbon material has a thickness of 5-50 µm, preferably 10-40 µm.
4. The molecular sieve modified separator of item 1, characterized in that, the composite modified layer of SCM-14 molecular sieve/conductive carbon material comprises the conductive carbon material and the SCM-14 molecular sieve in a mass ratio of 1: ( 1-9 ) , preferably 1: ( 2-9 ) .
5. The molecular sieve modified separator of item 1, characterized in that, the conductive carbon materials are at least one selected from a group consisting of graphene, graphene oxide, reduced graphene oxide, carbon nanotubes, carbon nanofibers, acetylene black, Super P, and Ketjen black, preferably at least one selected from a group consisting of graphene, graphene oxide, and reduced graphene oxide.
6. The molecular sieve modified separator of item 1, characterized in that, the SCM-14 molecular sieve has a schematic chemical composition formula of "SiO₂·1/nGeO₂", where the molar ratio of silicon to germanium n is ≤ 30, preferably 0.5 ≤ n ≤ 20.
7. The molecular sieve modified separator of item 1 or 6, characterized in that, the SCM-14 molecular sieve has a specific surface area of 100-500 m2/g.
8. A method for preparing the molecular sieve modified separator of any one of items 1-7, comprising the steps of:
   (1) grinding and mixing the SCM-14 molecular sieve and the conductive carbon material, to obtain a mixture of the SCM-14 molecular sieve and the conductive carbon material;
   (2) dispersing the mixture of the SCM-14 molecular sieve and the conductive carbon material and a binder in a solvent to obtain a coating slurry;
   (3) evenly applying the coating slurry on one surface of the polymeric substrate film, and then removing the solvent, to obtain the molecular sieve modified separator.
9. The method of item 8, characterized in that, in the step (2), the solvent is at least one selected from a group consisting of deionized water, anhydrous ethanol, N,N-dimethylacetamide, N,N-dimethylformamide, dimethyl sulfoxide, and N-methylpyrrolidone, preferably N-methylpyrrolidone;
   and/or, in the step (2), the binder is at least one selected from a group consisting of polyvinyl alcohol, carboxymethyl cellulose, polyvinylidene fluoride, and acrylics, preferably polyvinylidene fluoride;
   and/or, in the step (3), the applying is operated by at least one method selected from a group consisting of casting, blade coating, spraying, and spin coating, preferably blade coating.
10. Use of the molecular sieve modified separator of any one of items 1-7 in lithium-sulfur batteries.

As compared with the prior art, by selecting a specific type of SCM molecular sieve to modify the separator, and preferably using a specific type of SCM molecular sieve which further contains cobalt, the present invention can more effectively suppress the shuttle of polysulfides in lithium-sulfur batteries, and thereby reduce side reactions within the batteries, lower the self-discharge rate of lithium-sulfur batteries, and improve the cycling performances, rate performances and storage life of the batteries.

### Brief description of the drawings

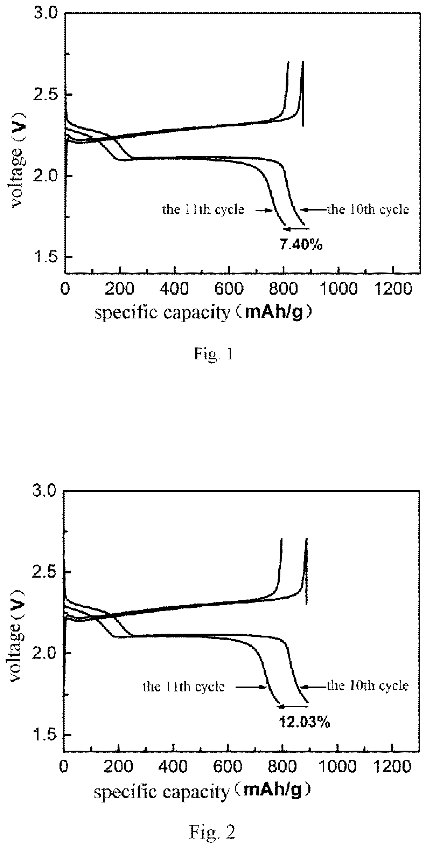

Fig. 1 shows the profile of the charging and discharging obtained in the 3-day self-discharge test of the lithium-sulfur battery of Example 1;
Fig. 2 shows the profile of the charging and discharging obtained in the 7-day self-discharge test of the lithium-sulfur battery of Example 1;

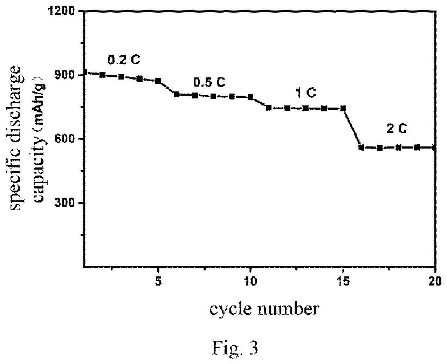

Fig. 3 shows the rate performances at different current densities of the lithium-sulfur battery of Example 1.

### Detailed description

It should be understood that the endpoints and any values in the ranges disclosed herein are not limited to the precise range or value, but to encompass values close to those ranges or values. For ranges of values, it is possible to combine between the endpoints of each of the ranges, between the endpoints of each of the ranges and the individual points, and between the individual points to give one or more new ranges of values as if these ranges of values are specifically disclosed herein. Other than in the examples, all numerical values of parameters in this specification are to be understood as being modified in all instances by the term "about" whether or not "about" actually appears before the numerical value.

In the first aspect of the present disclosure, provided is a separator for lithium-sulfur batteries, comprising a polymeric substrate film, and a composite layer disposed on one surface of the polymeric substrate film, wherein the composite layer comprises a SCM molecular sieve and a conductive carbon material, wherein the SCM molecular sieve is selected from a group consisting of SCM-14 and SCM-15.

Molecular sieve is a type of microporous crystal material formed from tetrahedrons of oxide TO₄ (T=Si, Al, P, B, Ge, etc.) by sharing their vertices. They typically have a regular pore structure with a molecular size (<1.2 nm) and good physical/chemical stability, and have been widely used in fields such as catalysis, adsorption separation, ion exchange, and membrane separation. In general, conventional molecular sieves are composed of silicon, aluminum, and oxygen elements, and can have one-dimensional, two-dimensional, or three-dimensional pore structures. Examples of the conventional molecular sieves include MCN-22, ZSM-35, SAPO-34, 3A, 13X, and the like.

In the prior art, molecular sieves are used to modify separators for lithium-sulfur batteries. By the sieving function provided by the pores of the molecular sieves, the migration and diffusion of some polysulfides cross the separator can be prevented, which may improve the cycling stability performances of the batteries. Improvements on the performances that can be achieved by such a single physical action (i.e. sieving) are relatively limited. Moreover, the one-dimensional or two-dimensional pore structures may hinder the transfer of lithium ions to a certain degree, leading to adverse effects on the performances of the batteries.

The present invention takes advantage of a specific type of SCM molecular sieve in modifying the separator, wherein the SCM molecular sieve is selected from a group consisting of SCM-14 and SCM-15. The SCM molecular sieve selected by the present invention is composed of silicon, germanium, and oxygen elements, and has a three-dimensional pore structure. Preferably, the SCM molecular sieve further contains cobalt. The SCM molecular sieve selected by the present invention can more effectively suppress the shuttle effect of polysulfides and has less impact on the transfer of lithium ions.

In one embodiment, the SCM molecular sieve is at least one selected from a group consisting of SCM-14 and SCM-15, preferably SCM-14.

The SCM-15 molecular sieve and its preparation method are further described in Chinese patent CN109081359B, the entire content of which is incorporated herein by reference.

The SCM-14 molecular sieve and its preparation method are further described in Chinese patent CN109081360B, the entire content of which is incorporated herein by reference.

In one embodiment, the SCM-14 molecular sieve has a schematic chemical composition formula of "SiO₂·1/nGeO₂", where the molar ratio of silicon to germanium n is ≤ 30, preferably 0.5 ≤ n ≤ 20, further preferably 1 ≤ n ≤ 10, and more further preferably 1 ≤ n ≤ 5.

In one embodiment, the SCM-14 molecular sieve has an X-ray diffraction pattern including those peaks shown in Table A-1 or Table A-2.

**Table A-1**

| 2θ ( ° ) ^{(a)} | d-spacing ( Å ) ^{(b)} | relative intensity ( I/I₀×100 ) |
|---|---|---|
| 6.632 | 13.317 | s-vs |
| 8.384 | 10.537 | s-vs |
| 15.587 | 5.680 | w-m |
| 20.661 | 4.295 | w |
| 21.692 | 4.094 | w-vs |
| 25.693 | 3.464 | w-m |

| | | |
|---|---|---|
| (a) = ± 0.3°, (b) changed as a function of 2θ, | | |

**Table A-2**

| 2θ ( ° ) ^{(a)} | d-spacing ( Å ) ^{(b)} | relative intensity ( I/I₀× 100 ) |
|---|---|---|
| 6.632 | 13.344 ± 0.603 | s-vs |
| 8.384 | 10.551 ± 0.377 | s-vs |
| 15.587 | 5.682 ± 0.109 | w-m |
| 20.661 | 4.296 ± 0.062 | w |
| 21.692 | 4.094 ± 0.056 | w-vs |
| 25.693 | 3.465 ± 0.040 | w-m |

The SCM-14 molecular sieve has an X-ray diffraction pattern further including those X-ray diffraction peaks shown in Table B-1 or Table B-2.

**Table B-1**

| 2θ ( ° ) ^{(a)} | d-spacing ( Å ) ^{(b)} | relative intensity ( I/I₀× 100 ) |
|---|---|---|
| 10.289 | 8.591 | w |
| 11.677 | 7.572 | w |
| 13.287 | 6.658 | w |
| 26.231 | 3.395 | w |

| | | |
|---|---|---|
| (a) = ± 0.3°, (b) changed as a function of 2θ, | | |

**Table B-2**

| 2θ ( ° ) ^{(a)} | d-spacing ( Å ) ^{(b)} | relative intensity ( I/I₀×100 ) |
|---|---|---|
| 10.289 | 8.598 ± 0.250 | w |
| 11.677 | 7.577 ± 0.194 | w |
| 13.287 | 6.661 ± 0.150 | w |
| 26.231 | 3.395 ± 0.038 | w |

| | | |
|---|---|---|
| (a) = ± 0.3°, | | |

The SCM-14 molecular sieve has an X-ray diffraction pattern optionally further including those X-ray diffraction peaks shown in the following Table.

| 2θ ( ° ) ^{(a)} | d-spacing ( Å ) | relative intensity ( I/I₀×100 ) |
|---|---|---|
| 14.397 | 6.150 ± 0.127 | w |
| 23.479 | 3.786 ± 0.048 | w |
| 23.798 | 3.736 ± 0.046 | w |
| 24.421 | 3.642 ± 0.044 | w |

In the above XRD data of the molecular sieve, w, m, s and vs represent the intensity of the diffraction peaks, where w is weak, m is moderate, s is strong, and vs is very strong, as well-known to skilled persons in the art. In general, w is less than 20; m is 20-40; s is 40-70; vs is greater than 70.

In one embodiment, the SCM-14 molecular sieve has a three-dimensional pore structure, specifically comprising pores with a pore size of 6.66 Å along the 001 crystal plane, and pores with a pore size of 3.08 Å along the 100 and 010 crystal planes.

In one embodiment, the SCM-14 molecular sieve has a specific surface area of 100-500 m²/g, preferably 130-300 m²/g.

In one embodiment, the SCM molecular sieve further contains cobalt, preferably a SCM-14 molecular sieve further containing cobalt. In one embodiment, the SCM molecular sieve contains cobalt in an amount of 1-30 weight%, more preferably 4-15 weight%, based on the total weight of cobalt and the SCM molecular sieve.

In one embodiment, materials used for the polymeric substrate film are at least one selected from a group consisting of polyethylene (PE), polypropylene (PP), polyimide (PI), polyacrylonitrile (PAN), polyethylene terephthalate (PET), polytetrafluoroethylene (PTFE), and polyvinylidene fluoride (PVDF), preferably PE/PP composite material.

In one embodiment, the composite layer has a thickness of 5-50 µm, preferably 10-40 µm.

In one embodiment, the composite layer comprises the conductive carbon material and the SCM molecular sieve in a mass ratio of 1: ( 1-9 ) , preferably 1: ( 2-9 ) , and more preferably 1: ( 3-6 ) .

In one embodiment, the conductive carbon material is at least one selected from a group consisting of graphene, graphene oxide, reduced graphene oxide, carbon nanotubes, carbon nanofibers, acetylene black, Super P, and Ketjen black, preferably at least one selected from a group consisting of graphene, graphene oxide, and reduced graphene oxide.

In the second aspect of the present disclosure, provided is a method for preparing the above-mentioned separator, comprising:
(1) mixing the SCM molecular sieve and the conductive carbon material to obtain a mixture, wherein the SCM molecular sieve is selected from a group consisting of SCM-14 and SCM-15;
(2) dispersing the mixture and a binder in a solvent to obtain a coating slurry;
(3) applying the coating slurry on one surface of the polymeric substrate film, and then removing the solvent, to obtain the separator.

In one embodiment, the SCM molecular sieve is SCM-14 molecular sieve.

In one embodiment, the SCM molecular sieve further comprises cobalt, preferably is SCM-14 molecular sieve further comprising cobalt. In one embodiment, cobalt is present in an amount of 1-30 weight%, more preferably 4-15 weight%, based on the total weight of cobalt and the SCM molecular sieve. In one embodiment, the SCM molecular sieve further comprising cobalt may be prepared by a method comprising the steps of: mixing a solution of cobalt ion and the SCM molecular sieve, drying and reducing, to obtain the SCM molecular sieve doped with cobalt. In one embodiment, the solution of cobalt ion is a solution of cobalt chloride, a solution of cobalt nitrate, a solution of cobalt acetate, a solution of cobalt sulfate, or a mixture thereof. In one embodiment, the reducing is operated under a hydrogen atmosphere at a temperature of 600-750 °C for 1-4 hours.

In one embodiment, in the step (2), the solvent is at least one selected from a group consisting of deionized water, anhydrous ethanol, N,N-dimethylacetamide (DMAC), N,N-dimethylformamide (DMF), dimethyl sulfoxide (DMSO), and N-methylpyrrolidone (NMP), preferably N-methylpyrrolidone (NMP).

In one embodiment, in the step (2), the binder is at least one selected from a group consisting of polyvinyl alcohol (PVA), carboxymethyl cellulose (CMC), polyvinylidene fluoride (PVDF), and acrylics, preferably polyvinylidene fluoride (PVDF).

In one embodiment, in the step (1), the conductive carbon material and the SCM molecular sieve are in a mass ratio of 1: ( 1-9 ) , preferably 1: ( 2-9 ) , and more preferably 1: (3-6) .

In one embodiment, in the step (2), the mixture and the binder are in a mass ratio of ( 2-10 ) : 1, preferably (4-9) : 1.

In the above embodiments, in the step (3), the applying is operated by at least one method selected from a group consisting of casting, blade coating, spraying, and spin coating, preferably blade coating.

In the third aspect of the present disclosure, provided is the use of the above-mentioned separator in lithium-sulfur batteries.

In the fourth aspect of the present disclosure, provided is a lithium-sulfur battery, comprising a positive electrode, a negative electrode, and the above-mentioned separator between the positive and negative electrodes. The lithium-sulfur battery further comprises an electrolyte. The positive electrode, negative electrode and electrolyte can be selected from various positive electrodes, negative electrodes and electrolytes commonly used in lithium-sulfur batteries and known to those skilled in the art.

The molecular sieve modified separator in accordance with the present disclosure takes advantage of a specific type of SCM molecular sieve in modifying, wherein the SCM molecular sieve is selected from a group consisting of SCM-14 and SCM-15. Without intending to be bond to any theory, it is believed that, the selected type of SCM molecular sieve can effectively suppress the polysulfide shuttle effect in lithium-sulfur batteries by the synergistic effect of physical and chemical actions. On the one hand, the SCM molecular sieve contains germanium element. Germanium can chemically adsorb polysulfides, thereby helping to inhibit the shuttle of the same. On the other hand, the SCM molecular sieve has a three-dimensional pore structure with appropriate sizes (pores with pore sizes of 2-8 Å along the 001, 100 and 010 crystal planes, respectively) and a larger specific surface area (100-500 m²/g). Such structure not only limits the migration and diffusion of polysulfides through physical barrier functions, but also has a relatively small impact on the transfer of lithium ions. Through the above synergistic effects of physical and chemical actions associated with the composition and structure, the SCM molecular sieve can more effectively suppress the shuttle of polysulfides in lithium-sulfur batteries and reduce side reactions within the batteries. Additionally, the SCM preferably further contains cobalt. The introduction of cobalt can not only improve the conductivity of the positive electrode side of the separator, but also serve as an active site to enhance the reaction kinetics of converting polysulfides. Therefore, compared with existing molecular sieve modified separators, the present invention takes advantage of specific types of SCM molecular sieves, especially those further containing cobalt, to modify separators, which can significantly improve the cycling performances, rate performances and storage life of the batteries.

### Examples

For a better understanding of the present disclosure, the embodiments of the invention will be described in detail below through the examples. The examples are intended to illustrate and not to limit the invention in any way.

### List of reagents:

The SCM-14 molecular sieve: the SCM-14 molecular sieve prepared in Example 1 of CN109081360B, with a specific surface area of 193 m²/g and SiO₂/GeO₂=3.7
The SCM-15 molecular sieve: the SCM-15 molecular sieve prepared in Example 1 of CN109081359B
Graphene: G139798 graphene, available from Shanghai Aladdin Biochemical Technology Co., Ltd.
PVDF, NMP, CMC, DMF and cobalt chloride: available from China National Pharmaceutical Group Chemical Reagent Co., Ltd.

### Tests

### Assembling of lithium-sulfur battery samples:

A positive electrode was firstly prepared by: mixing sublimation sulfur as the active material, Ketjen black as the conductive agent, and PVDF as the binder in a mass ratio of 6:3:1, adding NMP thereto, to form a positive electrode slurry, coating the positive electrode slurry on an aluminum foil and drying, to obtain the positive electrode. Then, a 2025 button battery was assembled in a glove box under argon atmosphere with water and oxygen content of less than 0.1 ppm by: assembling in order of a positive electrode shell, a positive electrode, a separator, a lithium negative electrode, a foam nickel and a negative electrode shell, and adding 100 µL electrolyte. The electrolyte used was a mixed solution containing 1 mol/L lithium bis (trifluoromethylsulfonyl) imide and 0.2 mol/L lithium nitrate in 1,3-dioxolane/ dimethoxyethane (wherein DOL/DME was in a volume ratio of 1:1).

The lithium-sulfur battery samples as prepared above were subjected to constant current charging and discharging tests to detect their self-discharge rate, rate performances and cycling performances.

### Test for self-discharge rate

The lithium-sulfur battery samples were subjected to charging and discharging at a voltage range of 1.7-2.7 V and 0.2 C (1 C=1675 mA/g) for 10 cycles, then were stored for 3 days and 7 days respectively, and were subjected to the 11th cycle of charging and discharging. The specific discharge capacity of each charging-discharging cycle was recorded and used in calculating the self-discharge rate according to the following formula: The self-discharge rate = (the specific discharge capacity of the 10th cycle - the specific discharge capacity of the 11th cycle)/the specific discharge capacity of the 10th cycle * 100%

### Test for rate performances

The lithium-sulfur battery samples were subjected to charging and discharging at a voltage range of 1.7-2.7 V and 1 C for 5 cycles. The specific discharge capacity of each charging-discharging cycle was recorded and used in calculating the average specific discharge capacity of the 5 cycles.

The average specific discharge capacity of the 5 cycles at 1C= the sum of the specific discharge capacities from the 1st cycle to the 5th cycle /5

Similarly, the charging and discharging was repeated at 2C for 5 cycles, and the average specific discharge capacity of the 5 cycles at 2C was calculated.

### Test for cycling performances

The lithium-sulfur battery samples were subjected to charging and discharging at a voltage range of 1.7-2.7 V and 0.1C and 0.2C, respectively, for 2 cycles, and subjected to further charging and discharging at 0.5 C for 150 cycles. The specific discharge capacity of the first cycle at 0.5C and that of the 150th cycle were recorded and used in calculating the capacity retention after 150 cycles at 0.5 C according to the following formula, so as to characterize the cycling performance. The capacity retention = the specific discharge capacity of the 150th cycle/the specific discharge capacity of the 1st cycle * 100%

### Example 1

### The preparation of a molecular sieve modified separator

(1) 0.35 g of the SCM-14 molecular sieve and 0.1 g of graphene were grinded and mixed in a mortar, to obtain 0.45 g mixture of the SCM-14 molecular sieve and graphene;
(2) the 0.45 g mixture of the SCM-14 molecular sieve and grapheme, together with 0.05 g of PVDF, was dispersed in NMP, stirred and mixed evenly, to obtain a coating slurry;
(3) the coating slurry was uniformly applied on one surface of a PP/PE substrate film by blade coating, then dried to remove the solvent, to obtain the molecular sieve modified separator, wherein the composite layer of SCM-14 molecular sieve/grapheme has a thickness of 15 µm.

### Tests for performances of the molecular sieve modified separator

As mentioned above, the prepared molecular sieve modified separator was used in assembling lithium-sulfur battery samples and the samples were tested for their self-discharge rate, rate performances and cycling performances. The test results were shown in Table 1.

### Example 2

Example 1 was repeated except that during the preparation of the molecular sieve modified separator, 0.35 g of the SCM-14 molecular sieve and 0.1 g of graphene were replaced with 0.3 g of the SCM-14 molecular sieve and 0.15 g of graphene.

Example 1 was repeated to use the prepared molecular sieve modified separator in assembling lithium-sulfur battery samples and the samples were tested for their performances. The test results were shown in Table 1.

### Example 3

Example 1 was repeated except that during the preparation of the molecular sieve modified separator, 0.35 g of the SCM-14 molecular sieve was replaced with 0.3 g of the SCM-14 molecular sieve and 0.05 g of PVDF was replaced with 0.1 g of PVDF.

Example 1 was repeated to use the prepared molecular sieve modified separator in assembling lithium-sulfur battery samples and the samples were tested for their performances. The test results were shown in Table 1.

### Example 4

Example 1 was repeated except that during the preparation of the molecular sieve modified separator, graphene was replaced with carbon nanotubes.

Example 1 was repeated to use the prepared molecular sieve modified separator in assembling lithium-sulfur battery samples and the samples were tested for their performances. The test results were shown in Table 1.

### Example 5

Example 1 was repeated except that during the preparation of the molecular sieve modified separator, PVDF was replaced with CMC and the composite layer of SCM-14 molecular sieve/grapheme has a thickness of 20 µm.

Example 1 was repeated to use the prepared molecular sieve modified separator in assembling lithium-sulfur battery samples and the samples were tested for their performances. The test results were shown in Table 1.

### Example 6

Example 1 was repeated except that during the preparation of the molecular sieve modified separator, NMP was replaced with DMF.

Example 1 was repeated to use the prepared molecular sieve modified separator in assembling lithium-sulfur battery samples and the samples were tested for their performances. The test results were shown in Table 1.

### Example 7

Example 1 was repeated except that during the preparation of the molecular sieve modified separator, 0.35 g of the SCM-14 molecular sieve and 0.1 g of graphene were replaced with 0.37 g of the SCM-14 molecular sieve and 0. 08 g of graphene.

Example 1 was repeated to use the prepared molecular sieve modified separator in assembling lithium-sulfur battery samples and the samples were tested for their performances. The test results were shown in Table 1.

### Example 8

Example 1 was repeated except that during the preparation of the molecular sieve modified separator, 0.35 g of the SCM-14 molecular sieve and 0.1 g of graphene were replaced with 0.40 g of the SCM-14 molecular sieve and 0.05 g of graphene.

Example 1 was repeated to use the prepared molecular sieve modified separator in assembling lithium-sulfur battery samples and the samples were tested for their performances. The test results were shown in Table 1.

### Example 9

Example 1 was repeated except that during the preparation of the molecular sieve modified separator, SCM-14 molecular sieve was replaced with SCM-15 molecular sieve.

Example 1 was repeated to use the prepared molecular sieve modified separator in assembling lithium-sulfur battery samples and the samples were tested for their performances. The test results were shown in Table 1.

### Example 10

Example 7 was repeated except that during the preparation of the molecular sieve modified separator, SCM-14 molecular sieve was replaced with SCM-15 molecular sieve.

Example 1 was repeated to use the prepared molecular sieve modified separator in assembling lithium-sulfur battery samples and the samples were tested for their performances. The test results were shown in Table 1.

### Example 11

Example 1 was repeated except that during the preparation of the molecular sieve modified separator, SCM-14 molecular sieve was replaced with a cobalt doped SCM-14 molecular sieve.

The cobalt doped SCM-14 molecular sieve was prepared by: impregnating 2g SCM-14 molecular sieve in 18mL a solution of cobalt chloride with a concentration of 0.1mol/L, drying under air conditions at 80 °C for 8 hours, and then thermal treating under a hydrogen atmosphere at 700 °C for 2 hours, to obtain the cobalt doped SCM-14 molecular sieve.

Example 1 was repeated to use the prepared molecular sieve modified separator in assembling lithium-sulfur battery samples and the samples were tested for their performances. The test results were shown in Table 1.

### Example 12

Example 11 was repeated except that during the preparation of the molecular sieve modified separator, 0.35 g of cobalt doped SCM-14 molecular sieve and 0.1 g of graphene were replaced with 0.37 g of cobalt doped SCM-14 molecular sieve and 0.08 g of graphene.

Example 1 was repeated to use the prepared molecular sieve modified separator in assembling lithium-sulfur battery samples and the samples were tested for their performances. The test results were shown in Table 1.

### Example 13

Example 11 was repeated except that during the preparation of the molecular sieve modified separator, 0.35 g of cobalt doped SCM-14 molecular sieve and 0.1 g of graphene were replaced with 0.40 g of cobalt doped SCM-14 molecular sieve and 0.05 g of graphene.

Example 1 was repeated to use the prepared molecular sieve modified separator in assembling lithium-sulfur battery samples and the samples were tested for their performances. The test results were shown in Table 1.

### Example 14

Example 11 was repeated except that during the preparation of the molecular sieve modified separator, SCM-14 molecular sieve was replaced with SCM-15 molecular sieve.

Example 1 was repeated to use the prepared molecular sieve modified separator in assembling lithium-sulfur battery samples and the samples were tested for their performances. The test results were shown in Table 1.

### Comparative Example 1

Example 1 was repeated except that the preparation of the molecular sieve modified separator was omitted. Instead, the PP/PE substrate film was directly used to replace the molecular sieve modified separator in assembling lithium-sulfur battery samples and the samples were tested for their performances. The test results were shown in Table 1.

### Comparative Example 2

Example 1 was repeated except that during the preparation of the separator, SCM-14 molecular sieve was not used and 0.1 g of graphene was replaced with 0.45 g of graphene.

Example 1 was repeated to use the prepared molecular sieve modified separator in assembling lithium-sulfur battery samples and the samples were tested for their performances. The test results were shown in Table 1.

### Comparative Example 3

Example 1 was repeated except that during the preparation of the molecular sieve modified separator, 0.35 g of the SCM-14 molecular sieve was replaced with 0.35 g of ZSM-35 molecular sieve.

Example 1 was repeated to use the prepared molecular sieve modified separator in assembling lithium-sulfur battery samples and the samples were tested for their performances. The test results were shown in Table 1.

### Comparative Example 4

Example 1 was repeated except that during the preparation of the molecular sieve modified separator, 0.35 g of the SCM-14 molecular sieve was replaced with 0.35 g of SAPO-34 molecular sieve.

Example 1 was repeated to use the prepared molecular sieve modified separator in assembling lithium-sulfur battery samples and the samples were tested for their performances. The test results were shown in Table 1.

### Comparative Example 5

Example 1 was repeated except that during the preparation of the molecular sieve modified separator, SCM-14 molecular sieve was replaced with 13X molecular sieve.

Example 1 was repeated to use the prepared molecular sieve modified separator in assembling lithium-sulfur battery samples and the samples were tested for their performances. The test results were shown in Table 1.

### Comparative Example 6

Example 1 was repeated except that during the preparation of the separator, 0.35 g of the SCM-14 molecular sieve and 0.1 g of graphene were replaced with 0.45 g of a cobalt metal powder.

The cobalt metal powder was prepared by: thermal treating 5g of cobalt chloride powder in a hydrogen atmosphere at 700 °C for 2 hours, to obtain the cobalt metal powder.

Example 1 was repeated to use the prepared modified separator in assembling lithium-sulfur battery samples and the samples were tested for their performances. The test results were shown in Table 1.

### Comparative Example 7

Example 1 was repeated except that during the preparation of separator, SCM-14 molecular sieve was replaced with a cobalt metal powder.

The cobalt metal powder was prepared by: thermal treating 5g of cobalt chloride powder in a hydrogen atmosphere at 700 °C for 2 hours, to obtain the cobalt metal powder.

Example 1 was repeated to use the prepared modified separator in assembling lithium-sulfur battery samples and the samples were tested for their performances. The test results were shown in Table 1.

### Comparative Example 8

Example 1 was repeated except that during the preparation of the molecular sieve modified separator, SCM-14 molecular sieve was replaced with a cobalt doped ZSM-35 molecular sieve.

The cobalt doped ZSM-35 molecular sieve was prepared by: impregnating 2g ZSM-35 molecular sieve in 18mL a solution of cobalt chloride with a concentration of 0.1mol/L, drying under air conditions at 80 °C for 8 hours, and then thermal treating under a hydrogen atmosphere at 700 °C for 2 hours, to obtain the cobalt doped ZSM-35 molecular sieve.

Example 1 was repeated to use the prepared molecular sieve modified separator in assembling lithium-sulfur battery samples and the samples were tested for their performances. The test results were shown in Table 1.

**Table 1 results of the tests for performances**

| | self-discharge rate, 3-day (%) | self-discharge rate, 7-day (%) | ( mAh/g ) average specific discharge capacity at 1C (mAh/g) | average specific discharge capacity at 2C (mAh/g) | ( mAh/g ) specific discharge capacity after 150 cycles at 0.5C (mAh/g) | capacity retention after 150 cycles at 0.5C (%) |
|---|---|---|---|---|---|---|
| Ex.1 | 7.40 | 12.03 | 746 | 561 | 738 | 84 |
| Ex.2 | 8.65 | 13.32 | 785 | 608 | 720 | 80 |
| Ex.3 | 8.22 | 12.60 | 735 | 550 | 710 | 81 |
| Ex.4 | 11.34 | 16.42 | 682 | 506 | 602 | 74 |
| Ex.5 | 10.72 | 15.86 | 626 | 464 | 566 | 75 |
| Ex.6 | 7.61 | 12.44 | 740 | 552 | 724 | 83 |
| Ex.7 | 8.12 | 12.54 | 722 | 540 | 695 | 82 |
| Ex. 8 | 8.53 | 13.16 | 692 | 518 | 656 | 81 |
| Ex.9 | 8.87 | 13.66 | 720 | 536 | 691 | 82 |
| Ex.10 | 9.02 | 13.91 | 706 | 517 | 640 | 80 |
| Ex.11 | 7.21 | 11.22 | 834 | 656 | 809 | 88 |
| Ex.12 | 7.91 | 12.10 | 765 | 582 | 730 | 83 |
| Ex.13 | 8.13 | 12.64 | 729 | 544 | 698 | 82 |
| Ex.14 | 8.55 | 13.20 | 766 | 574 | 742 | 84 |
| CE.1 | 20.52 | 30.28 | 416 | 298 | 311 | 54 |
| CE.2 | 17.16 | 24.22 | 542 | 425 | 378 | 58 |
| CE.3 | 12.21 | 18.60 | 556 | 434 | 463 | 67 |
| CE.4 | 13.37 | 19.18 | 589 | 451 | 468 | 65 |
| CE.5 | 14.90 | 21.25 | 543 | 416 | 403 | 61 |
| CE.6 | 18.34 | 27.16 | 575 | 440 | 398 | 56 |
| CE.7 | 15.02 | 21.35 | 554 | 432 | 400 | 59 |
| CE.8 | 11.45 | 17.41 | 594 | 466 | 490 | 70 |

## Claims

1. A separator for lithium-sulfur batteries, comprising a polymeric substrate film, and a composite layer disposed on one surface of the polymeric substrate film, wherein the composite layer comprises a SCM molecular sieve and a conductive carbon material, and wherein the SCM molecular sieve is selected from a group consisting of SCM-14 and SCM-15.

2. The separator of claim 1, **characterized in that**, materials for the polymeric substrate film are at least one selected from a group consisting of polyethylene, polypropylene, polyimide, polyacrylonitrile, polyethylene terephthalate, polytetrafluoroethylene and polyvinylidene fluoride, preferably polyethylene, polypropylene or a combination thereof.

3. The separator of claim 1, **characterized in that**, the composite layer has a thickness of 5-50 µm, preferably 10-40 µm.

4. The separator of claim 1, **characterized in that**, the composite layer comprises the conductive carbon material and the SCM molecular sieve in a mass ratio of 1: (1-9) , preferably 1: (2-9) , and more preferably 1: (3-6) .

5. The separator of claim 1, **characterized in that**, the conductive carbon material is at least one selected from a group consisting of graphene, graphene oxide, reduced graphene oxide, carbon nanotubes, carbon nanofibers, acetylene black, Super P, and Ketjen black, preferably at least one selected from a group consisting of graphene, graphene oxide, and reduced graphene oxide.

6. The separator of claim 1, **characterized in that**, the SCM molecular sieve is SCM-14 molecular sieve;
preferably, the SCM-14 molecular sieve has a schematic chemical composition formula of SiO₂·1/nGeO₂, where the molar ratio of silicon to germanium n is ≤ 30, preferably 0.5 ≤ n ≤ 20;
preferably, the SCM-14 molecular sieve has a specific surface area of 100-500 m²/g.

7. The separator of claim 1, **characterized in that**, the SCM molecular sieve further comprises cobalt;
preferably, the SCM molecular sieve contains cobalt in an amount of 1-30 weight%, more preferably 4-15 weight%.

8. A method for preparing the separator of claim 1, comprising:
(1) mixing the SCM molecular sieve and the conductive carbon material to obtain a mixture, wherein the SCM molecular sieve is selected from a group consisting of SCM-14 and SCM-15;
(2) dispersing the mixture and a binder in a solvent to obtain a coating slurry;
(3) applying the coating slurry on one surface of the polymeric substrate film, and then removing the solvent, to obtain the separator.

9. The method of claim 8, **characterized in that**, in the step (2), the solvent is at least one selected from a group consisting of deionized water, anhydrous ethanol, N, N-dimethylacetamide, N,N-dimethylformamide, dimethyl sulfoxide, and N-methylpyrrolidone, preferably N-methylpyrrolidone;
and/or, in the step (2), the binder is at least one selected from a group consisting of polyvinyl alcohol, carboxymethyl cellulose, polyvinylidene fluoride and acrylics, preferably polyvinylidene fluoride;
and/or, in the step (3), the applying is operated by at least one method selected from a group consisting of casting, blade coating, spraying, and spin coating, preferably blade coating.

10. The method of any one of claims 8-9, **characterized in that**, the SCM molecular sieve further contains cobalt;
preferably, the SCM molecular sieve contains cobalt in an amount of 1-30 weight%, more preferably 4-15 weight%;
preferably, the method further comprises: obtaining a SCM molecular sieve comprising cobalt, which comprises the steps of: mixing a solution of cobalt ion and the SCM molecular sieve, drying and reducing, to obtain the SCM molecular sieve comprising cobalt;
preferably, the solution of cobalt ion is a solution of cobalt chloride, a solution of cobalt nitrate, a solution of cobalt acetate, a solution of cobalt sulfate or a mixture thereof;
preferably, the reducing is operated under a hydrogen atmosphere at a temperature of 600-750 °C for 1-4 hours.

11. A lithium-sulfur battery, **characterized by** comprising a positive electrode, a negative electrode, and the separator of any one of claims 1-7 between the positive and negative electrodes.
